# EUROPÄISCHE PATENTSCHRIFT

(11) **EP 1 891 875 B1**
(45) Veröffentlichungstag und Bekanntmachung des Hinweises auf die Patenterteilung: **29.07.2009**
(21) Anmeldenummer: 07115506.3
(22) Anmeldetag: 23.03.2006
(51) Int. Cl.: B32B 3/12, A47B 13/08

(54) **BAUPLATTE, INSBESONDERE MÖBELPLATTE**
STRUCTURAL PANEL, IN PARTICULAR FURNITURE PANEL
PANNEAU DE CONSTRUCTION, EN PARTICULIER PANNEAU DE MEUBLE

(30) Priorität: 24.03.2005 DE 102005014276
(43) Veröffentlichungstag der Anmeldung: 27.02.2008
(62) Teilanmeldung aus: 06725277.5
(73) Patentinhaber: Fritz Egger GmbH & Co., 3105 Unterradlberg (AT)
(72) Erfinder: Riepertinger, Manfred, 83093 Bad Endorf (DE)
(74) Vertreter: Cohausz & Florack

(56) Entgegenhaltungen:
- WO-A-97/15212
- AT-B- 307 019
- DE-A1- 4 422 449
- DE-A1- 10 251 096
- DE-U1- 8 606 774
- DE-U1- 20 022 048
- DE-U1-0202005 003 73
- US-A- 3 906 127
- US-A- 5 947 037

## Beschreibung

Die Erfindung betrifft eine Bauplatte, insbesondere Möbelplatte, mit einer zumindest teilweise aus einem Wabenmaterial bestehenden Kernlage, mit mindestens einer Deckplatte und mit mindestens einem die Kernlage verstärkenden Rahmenelement.

Bauplatten mit einer umfangseitigen Rahmenkonstruktion, wobei der Rahmen die Kernlage vollständig umgibt, sind aus dem Stand der Technik der DE 296 09 442 U1 bekannt. Bekannt ist es ebenfalls, dass eine Bauplatte nur aus dem Kernmaterial besteht, ohne dass eine Rahmenkonstruktion vorgesehen ist.

Problematisch an den vorgennannren Platten ist, dass jegliche Form von Versorgungsleitungen nicht in die Bauplatte integrierbar sind und ggf. zusätzlich Kanäle an der Außenseite der Bauplatte angebracht werden müssen, in denen die Versogungsleitungen eingebracht werden können.

Der Erfindung liegt daher das technische Problem zugrunde, eine Bauplatte mit verbesserten Möglichkeiten der Integration von Leitungen anzugeben.

Das zuvor aufgezeigte technische Problem wird erfindungsgemäß durch eine Bauplatte der eingangs gennannten Art gelöst, die dadurch gekennzeichnet ist, dass mindestens ein Rahmenelement ein Holkammerprofil aufweist und innenseitig einen Kanal bildet.

Somit ist erkannt worden, dass das mindestens eine Rahmenelement selbst als Kanal bildendes Element verwendet werden kann. Somit werden vom Rahmenelement zwei Funktionen übernommen, denn einerseits wird der Bauplatte eine verbesserte Stabilit¨t verliehen und gleichzeitig können Leitungen in dem innenseitigen Kanal eingebracht werden.

Wenn die Bauplatte als Küchenarbeitsplatte eingesetzt wird, dann können in die Kanäle Wasserleitungen eingebracht werden, um damit unabhängig vom Ort des Wandauslasses die Montage eines Wasserauslaufhahnes zu ermöglichen.

Wenn die Bauplatte als Paneel, Tischplatte oder als Möbelplatte eingesetzt wird, dann können elektrische Leitungen eingebracht werden und damit unabhängig von der Wandinstallation Steckdosen, EDV-Anschlüsse, etc. an der Bauplatte vorgesehen werden. In dieser Weise können Lichtversorgungsleitungen oder Leitungen für Lautsprecher in die Bauplatte integriert werden.

Auch die Führung von Luft zur Versorgung eines Luftaustauschers, Heizlüfters, etc. ist möglich.

Das mindestens eine Rahmenelement ist an der Außenseite der Kernlage angeordnet, so dass das Rahmenelement die Stabilität im Bereich dieser Außenkante verbessert. Dieses kann beispielweise die Rückkante einer Arbeitsplatte sein, in die die vorgennanten Leitungen integriert werden können, die mit aus der Wand, an der die Arbeitsplatte befestigt wird, austretenden Leitungen verbunden werden.

Es ist bevorzugt, dass mehrere Rahmenelemente vorgesehen sind, die die Kernlage umfangseitig verstärken, wobei mindestens eines der Rahmenelemente einen Kanal bildet. Dieses Rahmenelemente kann dann insbesondere wiederum an der Rückkante angeordnet sein.

Wenn alle Seitenkanten der Bauplatte ein Rahmenelement aufweisen, dann ergibt sich ein besonders stabiler Aufbau der Bauplatte, wobei entlang des gesamten Umfangs Känale vorhanden sind, in denen Leitungen integriert werden können. Dabei ist es dann weiterhin bevorzugt, dass die Kanäle benachbart angeordneter Rahmenelemente miteinander verbunden sind. Somit entstecht durchgehender umfangseitiger Kanal, der im Aufbau der Bauplatte integriert ist.

In weiter bevorzugter Weise weist mindestens ein Rahmenelement zur Außenseite hin mindestens eine Ausnehmung auf, die bis zum Kanal hin reicht und somit den Kanal von außen zugänglich macht. Die Ausnehmung kann verschiedene Funktionen übernehmen.

Zum einen kann die Ausnehmung für ein Anbringen von Anschlüssen für die im Kanal integrierte Leitung verwendet werden. Somit können Steckdosen, Wasserranschlüsse oder Luftanschlüsse an der Bauplatte befestigt werden, wodurh die Funktionalität der Bauplatte zusätzlich verbessert wird.

Zum anderen kann die Ausnehmung als einfaches Fach dienen, so dass der Innenraum des Kanals als Stauraum verwendet werden kann. Dieser Stauraum kann offen ausgestaltet werden, oder es wird eine Klappe zum Verschließen des Stauraums vorgesehen. Ebenso kann eine Schublade vorgesehen sein, die in der Ausnehmung aufgenommen wird.

Bei einer weiteren Ausgestaltung der vorliegenden Erfindung verläuft mindestens ein Rahmenelement durch das Material der Kernlage hindurch. Dadurch ist es möglich, eine Leitung in die Bauplatte zu integrieren und einen Auslass an einer Stelle der Oberfläche der Bauplatte vorzusehen.

Beispielsweise können Telefonkabel oder Stromkabel innerhalb der Bauplatte angeordnet werden, die dann für das Aufstellen eines Telefonapparates oder einer Lampe mitten auf einer als Tischplatte dienenden Bauplatte genutzt werden können. Dazu verläuft das Rahmenelement in besonders bevorzugter Weise mittig durch die Kernlage hindurch, so dass sich eine symmetrische Anordnung ergibt.

Es ist weiterhin bevorzugt das Rahmenelement aus einem extrudierbaren Kunststoff herzustellen. Dadurch können die Rahmenelemente in rationeller Weise hergestellt werden, wodurch insgesamt eine kostengünstige Herstellung ermöglicht wird. Die im Stand der Technik verwendeten Rahmenelemente aus Vollholz können daher bei gleicher Stabilität der Leichtbauplatte und verbesserter Funktionalität vermieden werden.

Vorzugsweise besteht das Rahmenelement aus einem Holz-Kunststoff-Compound, der aus einer Formmasse aus einem thermoplastischen Kunststoff und einer Verstärkungskomponente hergestellt ist. Beispielsweise kann der thermoplastische Kunststoff ein synthetischer Polyester und die Verstärkungskomponente ein organischer Füllstoff, insbesondere Holzfasern sein.

Bei einer weiteren Ausgestaltung der Erfindung bestehen die Deckplatten aus einem Holzwerkstoff, so dass diese in herkömmlicher Weise oberflächengestaltet werden können. Dazu gehören Farbgebung und Oberflächenstruktur. Insbesondere ist es möglich, die Oberfläche mit einer Laminatschicht, einem Furnier, einer Folienbeschichtung oder einer Melaminharzbeschichtung zu veredeln.

Um den Anforderungen an die verschiedenen Gestaltungsmöglichkeiten der Bauplatte gerecht werden zu können, ist es weiterhin bevorzugt, dass die obere Deckplatte und mindestens ein einen Rand der Bauplatte bildendes Rahmenelement mit einer Beschichtung versehen sind. Die Beschichtung kann beispielsweise mittels Postforming-Verfahrens aufgebracht werden. Die Beschichtung kann dazu aus einem Laminat bestehen. Ebenso sind auch Beschichtungen aus Kunststofffolien möglich, die nach einer Formgebung der Bauplatte auf die Oberfläche aufgebracht werden. Dadurch wird ein einheitliches Aussehen der Oberflächen im Bereich der Deckplatten und der Rahmenelemente ermöglicht.

Des Weiteren kann die Kernlage aus einem Wabenkern aus Pappmaterial oder aus Aluminium bestehen. Diese Ausgestaltung des Kernmaterials führt zu erheblichen Gewichtsreduzierungen.

Im Folgenden wird die Erfindung anhand von Ausführungsbeispielen näher erläutert, wobei auf die beigefügte Zeichnung Bezug genommen wird. In der Zeichnung zeigen
- Fig. 1: ein erstes Ausführungsbeispiel einer erfindungsgemäßen Bauplatte im Querschnitt parallel zu den Deckplatten,
- Fig. 2: die in Fig. 1 dargestellte Bauplatte im Querschnitt senkrecht zu den Deckplatten,
- Fig. 3: ein zweites Ausführungsbeispiel einer erfindungsgemäßen Bauplatte im Querschnitt parallel zu den Deckplatten,
- Fig. 4: die in Fig. 3 dargestellte Bauplatte im Querschnitt senkrecht zu den Deckplatten,
- Fig. 5: ein drittes Ausführungsbeispiel einer erfindungsgemäßen Bauplatte im Querschnitt senkrecht zu den Deckplatten,
- Fig. 6: ein viertes Ausführungsbeispiel einer erfindungsgemäßen Bauplatte in einer perspektivischen Darstellung,
- Fig. 7: ein fünftes Ausführungsbeispiel einer erfindungsgemäßen Bauplatte im Querschnitt parallel zu den Deckplatten,
- Fig. 8: die in Fig. 7 dargestellte Bauplatte im Querschnitt senkrecht zu den Deckplatten.

Die in den verschiedenen Figuren dargestellten Ausführungsbeispiele weisen einer Reihe von Gemeinsamkeiten auf, so dass gleiche Elemente mit gleichen Bezugszeichen gekennzeichnet sind, auch wenn zwischen den Ausführungsbeispielen geringe Unterschiede in der konkreten Ausgestaltung auftreten können.

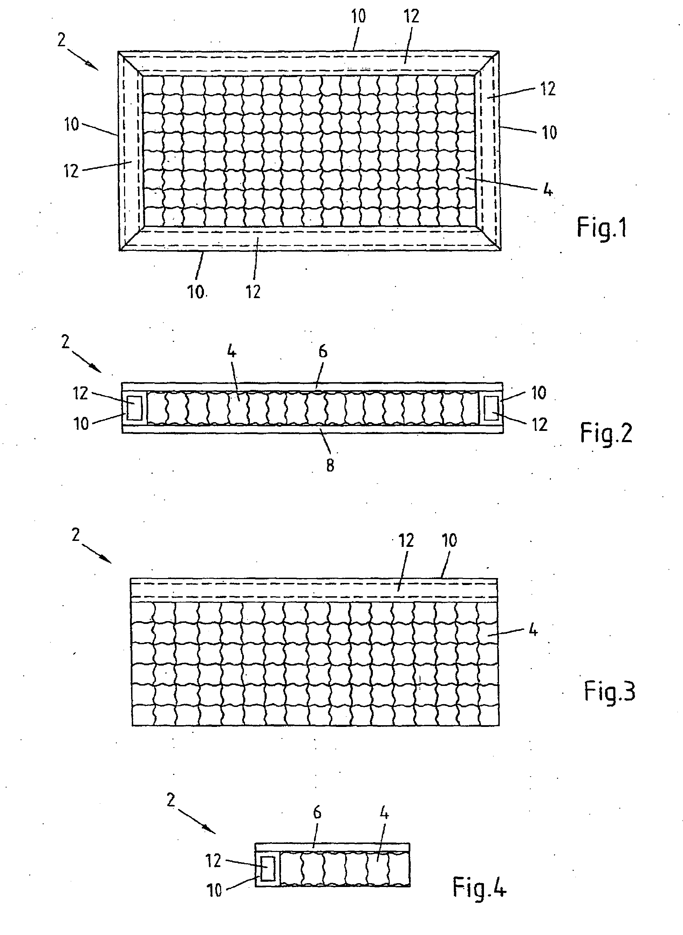

In den Fig. 1 und 2 ist ein erstes Ausführungsbeispiel einer erfindungsgemäßen Bauplatte 2 dargestellt. Die Bauplatte 2 weist eine Kernlage 4 auf, die zumindest teilweise aus einem Wabenmaterial aus Pappmaterial oder aus Aluminium besteht. Die Bauplatte 2 weist weiterhin eine obere Deckplatte 6 und eine unteren Deckplatte 8 auf, die aus einem Holzwerkstoff bestehen. Als Holzwerkstoff kommen dabei alle Werkstoffe in Frage, die entweder natürlichem Holz oder Teilen davon entsprechen oder die aus einer Verarbeitung von Holz entstanden sind, beispielsweise mitteldichte Faserplatte (MDF), hochdichte Faserplatte (HDF), Spanplatte, Oriented Strand Board Platte (OSB) oder Hartfaserplatte.

Des Weiteren weist die Bauplatte 2 vier die Kernlage 4 verstärkende Rahmenelemente 10 auf, die vorliegend die Kernlage 4 umfangseitig umgeben und diese somit stabilisieren. Wie insbesondere Fig. 2 zeigt, weisen die Rahmenelemente 10 ein Hohlkammerprofil auf und bilden somit jeweils innenseitig einen Kanal 12 aus. Dieser Kanal ist in Fig. 1 jeweils mit gestrichelten Linien dargestellt.

Wie Fig. 1 weiterhin zeigt, sind die Kanäle 12 benachbart angeordneter Rahmenelemente 10 miteinander verbunden. Dieses erfolgt hier durch einen winkligen Ansatz der Rahmenelemente an den Ecken, wodurch in einfacher Weise eine Verbindung aneinander angrenzender Kanäle erreicht wird.

Es ist auch möglich, nur eines der Rahmenelemente 10 mit einem Hohlkammerprofil auszubilden, während die anderen Rahmenelemente 10 massiv ausgebildet sind. Dann wäre es beispielsweise möglich, das mit einem Kanal versehene Rahmenelement 10 an einer Wand anzuordnen, am darin Leitungen zu verlegen.

Die Fig. 3 und 4 zeigen ein zweites Ausführungsbeispiel einer erfindungsgemäßen Bauplatte 2, die nur eine obere Deckplatte 6, nicht dagegen eine untere Deckplatte wie im ersten Ausführungsbeispiel. Darüber hinaus weist die Bauplatte 2 nur ein Rahmelement 10 auf, das vorliegend entlang einer außen liegenden Längskante der Bauplatte 2 angeordnet ist. Damit wird die Bauplatte 2 einerseits in Längsrichtung verstärkt und andererseits wird durch den integrierten Kanal 12 ein Verlegen einer Leitung ermöglicht.

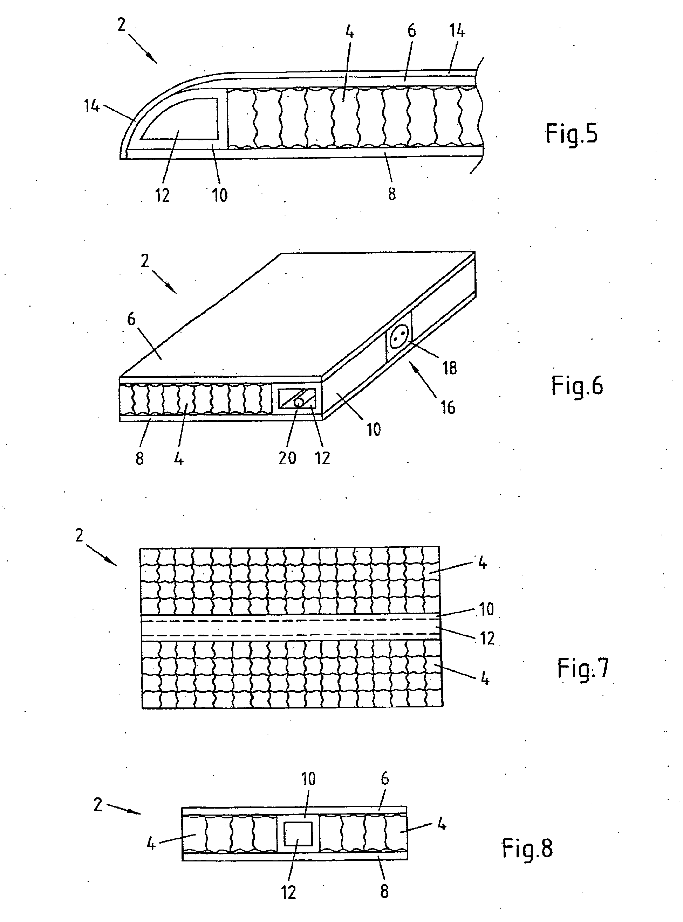

Fig. 5 zeigt ein Ausführungsbeispiel, bei dem das Rahmenelement 10 abgerundet ist und bei dem somit eine abgerundete Seitenkante der Bauplatte 2 entsteht. Hierbei ist der Querschnitt des Kanals 12 im Vergleich zu den vorangehenden Ausführungsbeispielen verringert, jedoch bleibt genügend Raum für das Verlegen einer Leitung.

Fig. 5 zeigt darüber hinaus, dass die obere Deckplatte 6 und das den Rand der Bauplatte 2 bildende Rahmenelement 10 mit einer Beschichtung 14 versehen sind. Dadurch wird eine geschlossene Oberfläche der Bauplatte sowohl auf der Oberseite als auch an der Seitenkante gewährleistet, während in der Seitenkante selbst ein Kanal integriert ist.

Fig. 6 zeigt ein Ausführungsbeispiel, bei dem ein Rahmenelement 10 zur Außenseite hin eine Ausnehmung 16 aufweist. In der Ausnehmung 16 ist eine Anschlussstelle in Form einer Steckdose 18 für eine im Rahmenelement 10 angeordnete elektrische Leitung 20 vorgesehen. Somit können nicht nur Leitungen 20 in der Bauplatte 2 integriert werden, sondern es besteht darüber hinaus die Möglichkeit, Anschlüsse in die Bauplatte 2 zu integrieren.

Darüber hinaus können einerseits auch andere Arten von Leitungen integriert werden, die andere Arten von Anschlüssen benötigen und andererseits kann die Ausnehmung auch zur oberen Deckplatte 6 oder zur unteren Deckplatte 8 hin geöffnet sein, so dass die Anschlüsse nach oben oder unten weisen.

Die Fig. 7 und 8 zeigen ein weiteres Ausführungsbeispiel einer erfindungsgemäßen Bauplatte 2, bei der ein Rahmenelement 10 durch das Material der Kernlage 4 mittig hindurch verläuft. Dadurch ist es möglich, Anschlüsse innerhalb der Deckplatten 6 oder 8 vorzusehen, die beabstandet von den Seitenkanten der Bauplatte 2 positioniert sind. Dadurch ergeben sich.weitere Gestaltungsmöglichkeiten für das Führen und Anschließen von Leitungen in und an einer Bauplatte 2.

## Patentansprüche

1. Bauplatte, insbesondere Möbelplatte,
- mit einer zumindest teilweise aus einem Wabenmaterial bestehenden Kernlage (4),
- mit mindestens einem die Kernlage (4) verstärkenden Rahmenelement (10), wobei mindestens eines des mindestens einen Rahmenelements (10) ein Hohlkammerprofil aufweist und innenseitig einen Versorgungskanal (12) bildet und
- mit mindestens einer die Kernlage (4) und das mindestens eine Rahmenelement (10) abdeckenden Deckplatte (6, 8),
**dadurch gekennzeichnet,**
**dass** das Rahmenelement (10), das das Hohlkammerprofil aufweist, den Rand der Bauplatte (2) bildet und
**dass** die obere Deckplatte (6) und das das Hohlkammerprofil aufweisende Rahmenelement (10) mit einer Beschichtung (14) versehen sind.

2. Bauplatte nach Anspruch 1,
**dadurch gekennzeichnet, dass** die Beschichtung (14) ein Laminat oder Kunststofffolien aufweist.

3. Bauplatte nach Anspruch 1 oder 2,
**dadurch gekennzeichnet,**
**dass** die Beschichtung (14) auf der Deckplatte (6) und dem Rahmenelement (10) eine geschlossene Oberfläche der Bauplatte bildet.

4. Bauplatte nach einem der Ansprüche 1 bis 3,
**dadurch gekennzeichnet,**
**dass** das Rahmenelement (10) abgerundet ist.

5. Bauplatte nach Anspruch 4,
**dadurch gekennzeichnet,**
**dass** die Beschichtung (14) auf dem abgerundeten Teil des Rahmenelements (10) vorgesehen ist.

6. Bauplatte nach einem der Ansprüche 1 bis 5,
**dadurch gekennzeichnet,**
**dass** das mindestens eine Rahmenelement (10) an der Außenseite der Kernlage (4) angeordnet ist.

7. Bauplatte nach einem der Ansprüche 1 bis 6,
**dadurch gekennzeichnet,**
**dass** mehrere Rahmenelemente (10) vorgesehen sind, die die Kernlage (4) umfangseitig verstärken, wobei mindestens eines der Rahmenelemente (10) einen Versorgungskanal (12) bildet.

8. Bauplatte nach Anspruch 7,
**dadurch gekennzeichnet,**
**dass** alle Rahmenelemente (10) einen Versorgungskanal (12) bilden.

9. Bauplatte nach Anspruch 7 oder 8,
**dadurch gekennzeichnet,**
**dass** die Kanäle (12) benachbart angeordneter Rahmenelemente (10) miteinander verbunden sind.

10. Bauplatte nach einem der Ansprüche 1 bis 9,
**dadurch gekennzeichnet,**
**dass** mindestens ein Rahmenelement (10) zur Außenseite hin eine Ausnehmung (16) aufweist.

11. Bauplatte nach einem der Ansprüche 1 bis 5,
**dadurch gekennzeichnet,**
**dass** mindestens ein Rahmenelement (10) durch das Material der Kernlage (4) hindurch verläuft.

12. Bauplatte nach Anspruch 11,
**dadurch gekennzeichnet,**
**dass** das Rahmenelement (10) mittig durch die Kernlage (4) hindurch verläuft.

13. Bauplatte nach einem Ansprüche 1 bis 12,
**dadurch gekennzeichnet,**
**dass** das mindestens eine Rahmenelement (10) aus einem extrudierbaren Kunststoff besteht.

14. Bauplatte nach Anspruch 13,
**dadurch gekennzeichnet,**
**dass** das Rahmenelement (10) aus einem Holz-Kunststoff-Compound besteht.

15. Bauplatte nach einem Ansprüche 1 bis 14,
**dadurch gekennzeichnet,**
**dass** die Deckplatten (6, 8) aus einem Holzwerkstoff bestehen.

16. Bauplatte nach einem Ansprüche 1 bis 15,
**dadurch gekennzeichnet,**
**dass** die Kernlage aus einem Wabenkern aus Pappmaterial oder aus Aluminium besteht.

## Claims

1. A construction board, in particular a furniture board, comprising
- a core layer (4) consisting at least partly of honeycomb material,
- at least one frame element (10) reinforcing the core layer (4), wherein at least one of said at least one frame elements (10) comprises a hollow chamber profile and forms a supply channel (12), and
- at least one cover plate (6, 8) covering said core layer (4) and said at least one frame element (10),
**characterized in that** the frame element (10) comprising the hollow chamber profile forms the edge of the construction board (2), and
that the top cover plate (6) as well as the frame element (10) comprising the hollow chamber profile is provided with a coating (14).

2. The construction board according to claim 1,
**characterized in that** the coating (14) comprises a laminate or plastic films.

3. The construction board according to claim 1 or 2,
**characterized in that** the coating (14) forms a closed surface of the construction board on the cover plate (6) and the frame element (10).

4. The construction board according to one of claims 1 to 3,
**characterized in that** the frame element (10) is rounded.

5. The construction board according to claim 4,
**characterized in that** the coating (14) is provided on the rounded part of the frame element (10).

6. The construction board according to one of claims 1 to 5,
**characterized in that** said at least one frame element (10) is arranged on the outer side of the core layer (4).

7. The construction board according to one of claims 1 to 6,
**characterized in that** multiple frame elements (10) are provided reinforcing the core layer (4) at its circumference, wherein at least one of the frame elements (10) forms a supply channel (12).

8. The construction board according to claim 7,
**characterized in that** all of said frame elements (10) form a supply channel (12).

9. The construction board according to claim 7 or 8,
**characterized in that** the channels (12) of frame elements (10) arranged next to each other are connected.

10. The construction board according to one of claims 1 to 9,
**characterized in that** at least one frame element (10) comprises a recess (16) at its outer side.

11. The construction board according to one of claims 1 to 5,
**characterized in that** at least one frame element (10) extends through the material of the core layer (4).

12. The construction board according to claim 11,
**characterized in that** the frame element (10) extends centrally through the core layer (4).

13. The construction board according to one of claims 1 to 12,
**characterized in that** said at least one frame element (10) consists of an extrudable plastic.

14. The construction board according to claim 13,
**characterized in that** the frame element (10) consists of a wood plastic compound.

15. The construction board according to one of claims 1 to 14,
**characterized in that** the cover plates (6, 8) consist of a wood material.

16. The construction board according to one of claims 1 to 15,
**characterized in that** the core layer consists of a honeycomb core made of cardboard material or aluminum.

## Revendications

1. Plaque de construction en particulier plaque de mobilier,
- avec une couche centrale (4) se composant au moins partiellement d'un matériau alvéolé,
- avec au moins un élément de cadre (10) renforçant la couche centrale (4), au moins un élément de cadre (10) présentant un profil creux et formant à l'intérieur un canal d'alimentation (12),
- avec au moins une plaque de couverture (6, 8) recouvrant la couche centrale (4) et l'au moins un élément de cadre (10),
**caractérisée en ce que**
l'élément de cadre (10) qui présente le profilé creux alvéolé forme le bord de la plaque de construction (2) et **en ce que** la plaque supérieure de couverture (6) et l'élément de cadre (10) présentant le profil creux sont munis d'un revêtement (14).

2. Plaque de construction selon la revendication 1, **caractérisée en ce que** le revêtement (14) présente un stratifié ou des films plastiques.

3. Plaque de construction selon la revendication 1 ou 2, **caractérisée en ce que** le revêtement (14) forme une surface fermée de la plaque de construction sur la plaque de couverture (6) et l'élément de cadre (10).

4. Plaque de construction selon l'une des revendications 1 à 3, **caractérisée en ce que** l'élément de cadre (10) est arrondi.

5. Plaque de construction selon la revendication 4, **caractérisée en ce que** le revêtement (14) est prévu sur la partie arrondie de l'élément de cadre (10).

6. Plaque de construction selon l'une des revendications 1 à 5, **caractérisée en ce que** l'au moins un élément de cadre (10) est disposé sur la face externe de la couche centrale (4).

7. Plaque de construction selon l'une des revendications 1 à 6, **caractérisée en ce qu'**il est prévu plusieurs éléments de cadre (10) qui renforcent sur la périphérie la couche centrale (4), au moins l'un des éléments de cadre (10) formant un canal d'alimentation (12).

8. Plaque de construction selon la revendication 7, **caractérisée en ce que** tous les éléments de cadre (10) forment un canal d'alimentation (12).

9. Plaque de construction selon la revendication 7 ou 8, **caractérisée en ce que** les canaux (12) sont reliés entre eux par des éléments de cadre (10) disposés à proximité.

10. Plaque de construction selon l'une des revendications 1 à 9, **caractérisée en ce qu'**au moins un élément de cadre (10) présente un évidement (16) en direction de la face externe.

11. Plaque de construction selon l'une des revendications 1 à 5, **caractérisée en ce qu'**u moins un élément de cadre (10) s'étend à travers le matériau de la couche centrale (4).

12. Plaque de construction selon la revendication 11, **caractérisée en ce que** l'élément de cadre (10) traverse la couche centrale (4) en plein milieu.

13. Plaque de construction selon l'une des revendications 1 à 12, **caractérisée en ce qu'**au moins un élément de cadre (10) compose d'une matière plastique extrudable.

14. Plaque de construction selon la revendication 13, **caractérisée en ce que** l'élément de cadre (10) se compose d'un composite bois plastique.

15. Plaque de construction selon l'une des revendications 1 à 14, **caractérisée en ce que** les plaques de recouvrement (6, 8) se composent d'un matériau de bois.

16. Plaque de construction selon l'une des revendications 1 à 15, **caractérisée en ce que** la couche centrale se compose d'un noyau alvéolaire en carton ou en aluminium.
